# FASCICULE DE BREVET EUROPEEN

(11) **EP 3 436 332 B1**
(45) Date de publication et mention de la délivrance du brevet: **29.04.2020**
(21) Numéro de dépôt: 17715216.2
(22) Date de dépôt: 09.03.2017
(51) Int. Cl.: B62H 5/20, B60R 25/102

(54) **DISPOSITIF AUTONOME D'ALERTE EN CAS DE MOUVEMENT DE VÉHICULE**
AUTONOME VORRICHTUNG ZUR WARNUNG IM FALL EINER FAHRZEUGBEWEGUNG
AUTONOMOUS DEVICE FOR ALERT IN CASE OF VEHICLE MOTION

(30) Priorité: 30.03.2016 FR 1652721
(43) Date de publication de la demande: 06.02.2019
(73) Titulaire: Orange, 75015 Paris (FR)
(72) Inventeur: MARCHE, Mikaël, 38830 SAINT PIERRE D'ALLEVARD (FR); DUTRONC, Frédéric, 92370 CHAVILLE (FR)
(74) Mandataire: Plasseraud IP
(86) Numéro de dépôt international: PCT/FR2017/050534
(87) Numéro de publication internationale: WO 2017/168069

(56) Documents cités:
- EP-A2- 1 522 981
- DE-U1-202013 007 614
- KR-A- 20100 130 925
- US-A1- 2005 149 741
- US-A1- 2013 150 028
- US-A1- 2015 139 423

## Description

Le domaine de l'invention se rapporte aux dispositifs d'alerte en cas de mouvement d'un véhicule, notamment de bicyclette. Ce mouvement peut être par exemple lié à un vol du véhicule.

Parmi l'ensemble des dispositifs d'alerte en cas de mouvement de véhicule, notamment de bicyclette, on connait des systèmes connectés qui reposent sur des communications via des réseaux mobiles, de sorte qu'un utilisateur se voit notifier le vol de son véhicule au moyen d'une application s'exécutant sur son téléphone mobile.

US 2013/150028 A1 et KR 2010 0130925 A divulguent des dispositifs autonomes d'alerte en cas de mouvement d'un véhicule selon le préambule de la revendication 1.

Le cœur de ces systèmes repose sur de la détection de mouvement. Les systèmes d'alerte connus associent le mouvement du véhicule à un vol et le notifient à l'utilisateur par un message d'alerte. L'un des inconvénients associés à ce type de systèmes d'alerte se rapporte au fait que ces systèmes reposent généralement sur l'emploi des batteries pour l'alimentation en énergie électrique des composants du système. L'utilisation d'un module radio notamment dans ces systèmes d'alerte nécessite une consommation d'énergie importante lors des phases de connexion. La présence de ces batteries a notamment pour effet d'imposer à l'utilisateur une recharge fréquente. En cas de décharge de la batterie, ces systèmes deviennent inopérants.

L'invention vient améliorer cette situation.

A cet effet, l'invention concerne un dispositif autonome d'alerte en cas de mouvement d'un véhicule, comportant :
- un récupérateur d'énergie électrique générée par la rotation d'une roue du véhicule,
- un module d'accumulation temporaire d'une partie au moins de l'énergie électrique,
- un module de télécommunication adapté pour être alimenté par le module d'accumulation temporaire, et configuré pour émettre, en réponse à son alimentation en énergie électrique par le module d'accumulation temporaire, une communication à destination d'un réseau pour l'envoi d'un message d'alerte à destination d'un terminal.

Ainsi, le module d'accumulation temporaire d'énergie, en coopération avec le récupérateur d'énergie, permet de rendre complètement autonome le dispositif d'alerte avec ainsi la possibilité d'alimenter un module de télécommunication, pratiquement dès les premières rotations de la roue du véhicule.

Dans une forme de réalisation, le module de télécommunication comprend une mémoire stockant des données d'identification du dispositif pour l'établissement dans une base de données d'un serveur connectée au réseau d'une association entre lesdites données d'identification du dispositif et des données représentatives d'une adresse du terminal. Ainsi, la communication envoyée par le module de télécommunication à destination du réseau peut ne comprendre que les données d'identification du dispositif. Le dispositif peut ne comporter alors qu'une simple mémoire de faible capacité pour stocker simplement les données d'identification du dispositif et faire fonctionner ainsi le module de télécommunication.

Dans cette forme de réalisation, la communication comprend les données d'identification du dispositif et est envoyée à destination du réseau en mode de diffusion. On entend par « mode de diffusion » un mode dans lequel la communication n'est pas adressée directement à un équipement spécifique. D'ailleurs, la communication peut ne comprendre que les données d'identification précitées, sans adresse particulière de destination. A titre d'exemple, cette communication peut être transmise en mode « point-à-point », ou encore en mode « broadcast » (les équipements non concernés et recevant la communication néanmoins étant agencés pour l'ignorer, ou la retransmettre à des équipements voisins).

Dans cette forme de réalisation, le réseau peut être un réseau radiofréquence étendu, basé sur un protocole de type LPWA (pour « Low Power Wide Area »). Un tel protocole permet une communication à bas débit et présente l'avantage d'une grande portée relativement à une faible alimentation électrique consommée par le module de télécommunication. Il peut s'agir plus précisément du protocole LoRaWAN ® (marque déposée au nom de Semtech Corporation) ou, en variante, du protocole Sigfox (marque déposée).

Ainsi, dans une telle réalisation, la communication n'est pas adressée à un équipement en particulier, et les seules données d'identification du dispositif autonome contenues dans cette communication suffisent à rendre cette communication exploitable par un serveur gérant la base de données précitée.

Dans une forme de réalisation, le récupérateur d'énergie est adapté pour convertir une partie au moins de l'énergie mécanique fournie par la rotation de la roue du véhicule en énergie électrique.

Selon un exemple de réalisation, le récupérateur d'énergie comprend au moins un premier aimant fixé sur la roue et un second aimant fixé sur le véhicule et immobile dans le référentiel du véhicule de telle sorte que le mouvement de rotation de la roue du véhicule entraine une interaction entre les premier et second aimants, générant une énergie électrique. Une telle réalisation, ici à base de micro-générateur électromagnétique, permet d'éviter les frottements qu'on peut retrouver dans d'autres réalisations (par exemple par l'usage d'une dynamo). En outre, cette réalisation est peu coûteuse, deux aimants étant suffisants pour concevoir le récupérateur d'énergie du dispositif. Dans cet exemple de réalisation, le module d'accumulation temporaire est connecté à l'aimant immobile par rapport à la roue.

Dans un autre exemple de réalisation, le récupérateur d'énergie comprend une dynamo. Cette réalisation présente l'avantage de ne pas être sensible à des vibrations mécaniques de la roue (comme le cas des aimants générant une énergie électrique). Elle est en outre peu coûteuse dans la conception, étant donné qu'une dynamo et un raccord électrique suffisent pour concevoir le récupérateur d'énergie. Par exemple, la dynamo peut être fixée au moyeu de la roue du véhicule.

Selon l'invention, le module d'accumulation temporaire est configuré pour alimenter le module de télécommunication en énergie électrique en réponse à l'atteinte ou au dépassement d'un seuil prédéterminé d'énergie électrique emmagasinée dans le module d'accumulation temporaire. L'atteinte de seuil est caractéristique du mouvement du véhicule. L'atteinte ou le dépassement du seuil s'accompagne d'une décharge du module d'accumulation temporaire pour alimenter le module de télécommunication. Cet aspect de l'invention est également particulièrement avantageux. En effet, l'utilisation d'un protocole de type LPWA (pour « Low Power Wide Area » comme les protocoles LoRaWAN ou Sigfox) pour le fonctionnement du module de télécommunication implique qu'une faible quantité d'énergie électrique est suffisante pour alimenter le module de télécommunication. Le seuil à atteindre dans le module d'accumulation temporaire est donc très faible. Un simple condensateur peut donc être suffisant pour confectionner le module d'accumulation temporaire, ce qui représente un coût très faible. L'invention vise en outre un procédé d'émission d'un message d'alerte en cas de mouvement d'un véhicule comportant un dispositif autonome selon l'invention, le procédé comportant au moins les étapes mises en œuvre auprès du dispositif autonome :
- sur réception d'une alimentation électrique issue du module d'accumulation temporaire d'énergie, ladite alimentation électrique étant générée par la rotation de la roue du véhicule, mettre en forme une communication en vue de l'envoi d'un message d'alerte à destination dudit terminal, et
- commander le module de télécommunication pour l'envoi de la communication à destination du réseau.

La communication comporte dans une réalisation des données d'identification du dispositif autonome, et le procédé comporte en outre des étapes mises en œuvre par un serveur connecté au réseau :
- sur réception de la communication, identifier une adresse du terminal dans une base de données reliée au serveur et comportant une association entre lesdites données d'identification du dispositif et des données représentatives d'une adresse du terminal, et
- émettre le message d'alerte à l'adresse du terminal via un second réseau.

Le second réseau peut être par exemple un réseau cellulaire pour contacter le terminal. Ainsi, le serveur assure l'interface entre un réseau véhiculant les communications issues de dispositifs autonomes (par exemple selon un protocole de type LPWA) et un réseau cellulaire (type GSM ou autre) pour transmettre les messages d'alarme aux terminaux connectés au second réseau.

Dans une réalisation, sur réception de la communication, le serveur détermine et envoie des données de géolocalisation représentatives d'une position courante du dispositif à destination du terminal.

Dans cette réalisation, la communication est envoyée et en mode de diffusion et est reçue par une pluralité d'antennes du réseau, le serveur étant apte alors à déterminer lesdites données de géolocalisation par exemple par triangulation. Dans le cas où la communication est reçue par une seule antenne du réseau, le serveur est apte à déterminer lesdites données précitées « de géolocalisation » simplement en fonction de l'amplitude du signal reçu. Ainsi, les données de géolocalisation que peut déterminer le serveur peuvent indiquer la position du dispositif avec une précision allant de l'ordre de quelques dizaines de mètres (par exemple de 30 et 80 mètres), jusqu'à quelques centaines de mètres (autour d'un kilomètre).

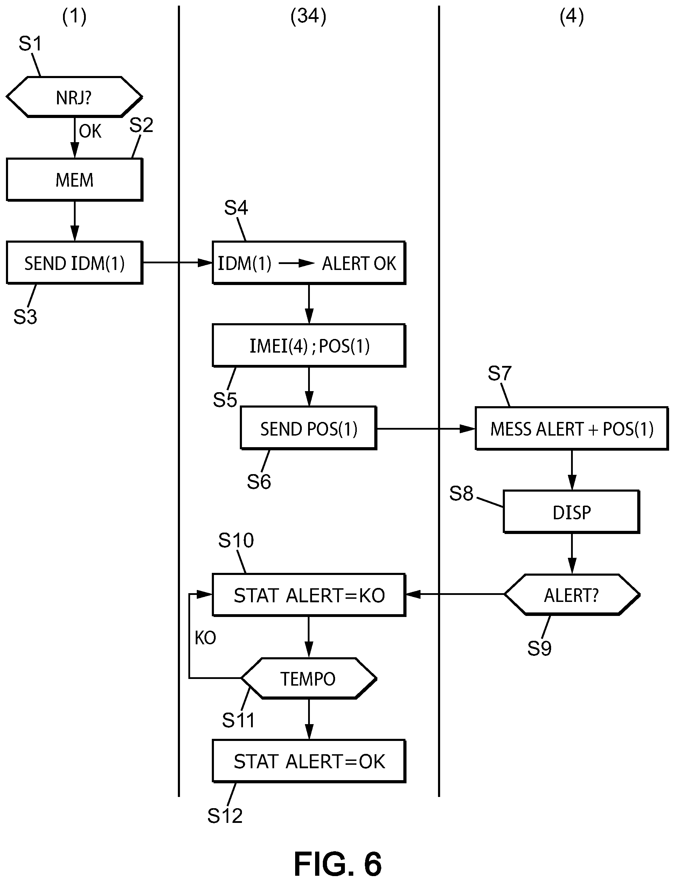

L'invention vise aussi un programme informatique comprenant des instructions pour la mise en œuvre du procédé lorsque lesdites instructions sont exécutées par un ordinateur. Les instructions d'un tel programme informatique peuvent être réparties entre une mémoire du dispositif autonome (par exemple une mémoire de son module de télécommunication) et une mémoire du serveur. D'autres instructions peuvent être éventuellement stockées aussi dans une mémoire du terminal, comme décrit plus loin en référence à la Figure 6. D'ailleurs, la Figure 6 illustre un ordinogramme d'un algorithme possible d'un programme informatique au sens de l'invention.

Selon un aspect non revendiqué, un serveur pour la mise en œuvre du procédé comporte:
- une connexion au réseau pour recevoir la communication comportant des données d'identification du dispositif autonome,
- un circuit de traitement pour retrouver dans la communication les données d'identification du dispositif autonome,
- une connexion à la base de données précitée pour établir une correspondance entre les données d'identification du dispositif autonome et des données représentatives d'une adresse du terminal, et
- une connexion à un second réseau auquel est relié le terminal, pour l'envoi du message d'alerte à l'adresse du terminal.

L'invention sera mieux comprise à la lecture de la description détaillée ci-après, donnée uniquement à titre d'exemple et faite en référence aux figures annexées, sur lesquelles :
- La Figure 1 est une illustration schématique d'un système comprenant un dispositif autonome d'alerte selon l'invention ;
- La Figure 2 illustre un récupérateur d'énergie du dispositif de la Figure 1 ;
- La Figure 3 illustre un récupérateur d'énergie selon une variante de réalisation ;
- La Figure 4 est une illustration schématique du dispositif d'alerte de la Figure 1 ;
- La Figure 5 illustre une base de données d'un serveur du système de la Figure 1 ; et
- La Figure 6 illustre un procédé d'émission d'un message d'alerte notamment en cas de vol d'un véhicule.

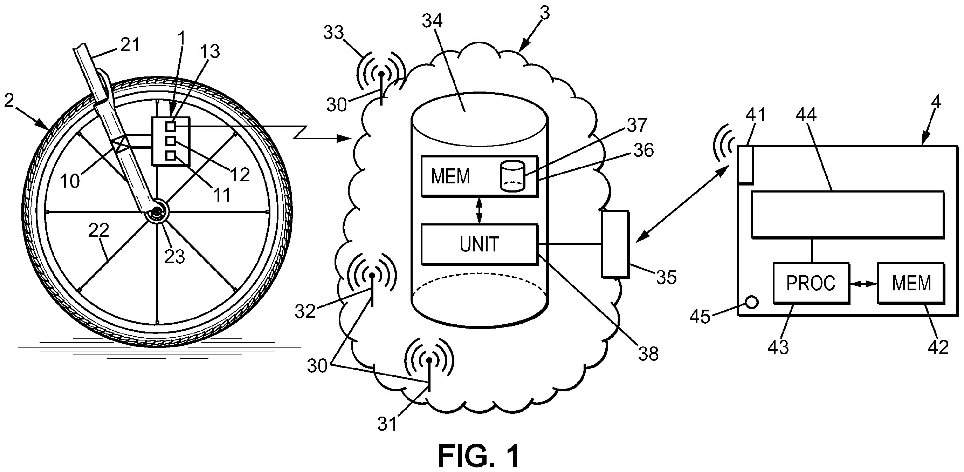

La Figure 1 illustre un système comportant un dispositif autonome d'alerte 1, selon l'invention. La Figure 1 montre en outre une roue 2 d'un véhicule, un réseau de télécommunication 3 et un terminal 4.

Le véhicule, dont seule une roue 2 est représentée en Figure 1, comprend une ou des roues destinées à être mises en mouvement sous l'effet d'un effort mécanique. Par exemple, cet effort est fourni par un moteur, ou par un utilisateur. Dans l'exemple de la Figure 1, le véhicule est une bicyclette. Ainsi, outre les roues, le véhicule peut comprendre une fourche 21 à laquelle au moins une roue est rapportée.

Le dispositif 1 est configuré pour émettre une communication à destination d'un réseau 3, notamment en cas de mouvement du véhicule. Ce mouvement correspond par exemple à un vol du véhicule. Plus spécifiquement, il est configuré pour émettre cette communication en réponse à la rotation de la roue 2 du véhicule pour l'envoi d'un message d'alerte à destination du terminal 4.

Le dispositif 1 est destiné à être fixé sur le véhicule au moyen d'une attache 10. Par exemple, il est fixé via cette attache 10 à la fourche 21 du véhicule. Alternativement, le dispositif 1 peut être fixé à toute autre partie du véhicule, par exemple un cadre du véhicule ou autre.

Alternativement, le dispositif 1 peut être intégré dans un élément du véhicule, par exemple moulé dans une pièce creuse à la fabrication du véhicule. Une telle réalisation permet typiquement d'envisager des applications autres qu'un simple dispositif d'alerte, antivol. Par exemple, la géolocalisation courante du véhicule peut s'afficher sur le Smartphone de l'utilisateur, en indiquant le nombre de kilomètres parcourus, éventuellement des suggestions, ou toute autre information que l'utilisateur pourrait souhaiter. On comprendra ainsi que, dès lors que le dispositif est autonome (et n'a pas besoin d'être démonté pour recharger une batterie qu'il comporterait), de nombreuses applications peuvent être envisagées, autres qu'une application d'alerte spécifiquement en cas de vol.

Le dispositif 1 comprend un récupérateur d'énergie 11, un module d'accumulation temporaire d'énergie électrique 12 et un module de télécommunication 13.

Le récupérateur d'énergie 11 est configuré pour récupérer de l'énergie électrique. Plus spécifiquement, le récupérateur d'énergie 11 est configuré pour récupérer l'énergie électrique générée par la rotation de la roue 2 du véhicule.

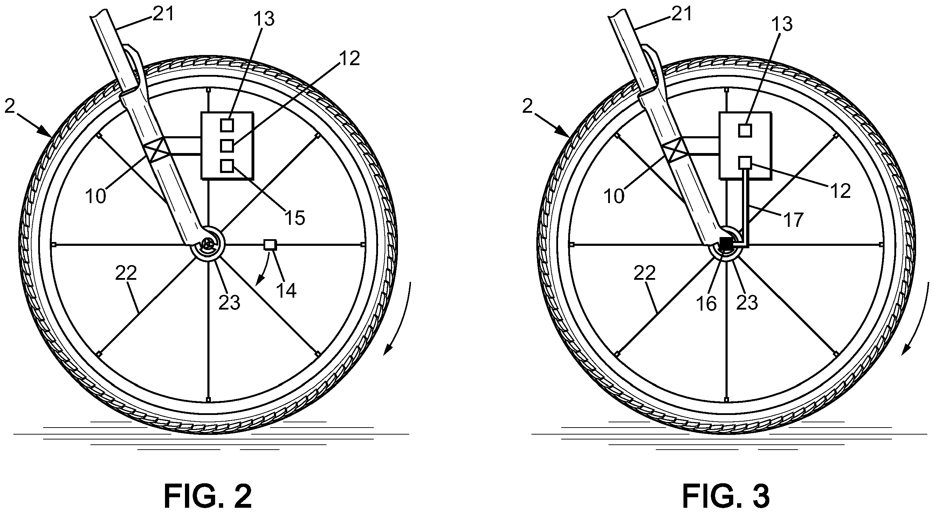

En référence à la Figure 2, dans une première réalisation de l'invention, le récupérateur d'énergie 11 comprend un premier aimant 14 et un second aimant 15.

Le premier aimant 14 est fixe par rapport à la roue 2 du véhicule, de telle sorte qu'il suive le même mouvement de rotation que la roue du véhicule. Dans l'exemple de la Figure 2, le premier aimant 14 est fixé à un rayon 22 de la roue du véhicule.

Le second aimant 15 est fixé au véhicule en étant immobile dans le référentiel du véhicule. Par exemple, le second aimant 15 est fixe relativement à la fourche 21 du véhicule.

Le premier aimant 14 et le second aimant 15 sont agencés de telle sorte que la rotation de la roue 2 du véhicule induit des interactions entre le premier aimant 14 et le second aimant 15 générant par induction de l'énergie électrique (par exemple un courant électrique alimentant le module d'accumulation temporaire d'énergie électrique 12). Avantageusement, la distance minimale entre le premier aimant 14 et le second aimant 15 au cours de la rotation de la roue 2 du véhicule est comprise entre 0,5 mm et 1 cm.

En référence à la Figure 3, qui illustre une variante du récupérateur d'énergie, le récupérateur d'énergie 11 comprend une dynamo 16 en lieu et place des aimants 14 et 15. En outre, il comprend un raccord électrique 17. La dynamo 16 est rapportée à la roue et est configurée pour générer de l'énergie électrique en réponse à la rotation. Par exemple, la dynamo 16 est agencée dans un moyeu 23 de la roue. Le raccord électrique 17 est adapté ici pour connecter la dynamo 16 au module d'accumulation temporaire d'énergie électrique 12 pour l'acheminement de l'énergie électrique générée par la dynamo au module d'accumulation temporaire.

Le récupérateur d'énergie a été décrit selon deux réalisations différentes. Le récupérateur d'énergie peut toutefois prendre une forme quelconque, sa fonction principale étant de générer de l'énergie électrique à partir de la rotation de la roue.

Le module d'accumulation temporaire d'énergie électrique 12 est destiné à stocker l'énergie électrique générée par la rotation de la roue 2 du véhicule et récupérée par le récupérateur d'énergie électrique 11. Il peut s'agir par exemple d'un ou plusieurs condensateurs ayant des capacités adaptées pour délivrer une énergie électrique (au module de télécommunication 13) à partir d'une valeur seuil emmagasinée dans le ou les condensateurs.

Le module d'accumulation temporaire d'énergie électrique 12 est ainsi configuré pour alimenter le module de télécommunication 13. Plus spécifiquement, il est configuré pour alimenter le module de télécommunication 13 en réponse à l'atteinte ou au dépassement d'un seuil prédéterminé d'énergie électrique. Par exemple, ce seuil d'énergie électrique peut correspondre à un courant traversant le module d'accumulation temporaire 12 de l'ordre de 30 à 35 mA

Le module de télécommunication 13 est configuré pour émettre une communication à destination du réseau 3 pour l'envoi d'un message d'alerte ensuite au terminal 4. Plus spécifiquement, le module de télécommunication 13 est configuré pour émettre la communication en réponse à son alimentation en énergie électrique par le module d'accumulation temporaire 12.

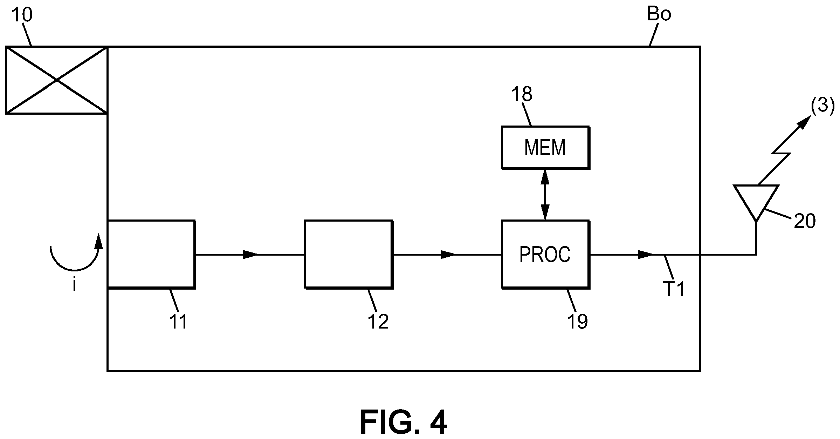

En référence à la Figure 4, le module de télécommunication 13 comprend une mémoire 18, un processeur 19 (par exemple un processeur radio) et une antenne 20. La mémoire 18 stocke des lignes de code d'un programme informatique dont l'exécution par le processeur 19 se traduit par le fonctionnement du module de télécommunication 13. En outre, la mémoire 18 comprend des données d'identification du dispositif 1. Comme décrit ci-après, ces données sont adaptées pour l'identification du dispositif 1 par un serveur 34 connecté au réseau 3 afin d'acheminer un ou des messages d'alerte jusqu'au terminal 4.

Le processeur 19 est configuré pour générer et fournir à l'antenne 20 un signal T1 à partir duquel l'antenne 20 envoie dans le réseau 3 la communication comportant ainsi au moins des données d'identification du dispositif 1 stockées dans la mémoire 18. Sur réception de cette communication auprès du serveur 34, ce dernier 34 est alors en mesure de générer un message d'alerte destiné en particulier au terminal 4, auquel est associé préalablement le dispositif d'alerte 1, comme décrit ci-après.

Par exemple, la mémoire 18 peut être de type flash. Le processeur 19 peut coopérer avec la mémoire 18 pour fonctionner spontanément en réponse à la fourniture d'énergie électrique par le module d'accumulation temporaire d'énergie 12 lorsque l'énergie que peut fournir ce dernier module 12 dépasse un seuil. En particulier, l'amorce du processeur 19 dès qu'il est alimenté peut consister à lire les instructions de la mémoire 18 pour identifier les données d'identification du dispositif d'alerte 1, former la communication avec ces données notamment, et piloter le module de télécommunication 13 pour envoyer cette communication.

En conséquence, la communication est elle-même représentative du fait que la roue 2 du véhicule est en mouvement depuis quelques rotations. Avantageusement, le module de télécommunication 13 est configuré pour émettre la communication à destination du réseau 3 via un protocole de communication connu sous l'acronyme LPWA, pour « Low-Power Wide-Area », qui signifie « basse-puissance et longue-portée » en français. Ainsi, quelques rotations peuvent suffire pour envoyer la communication précitée.

Avantageusement, outre les éléments décrits ci-dessus, le dispositif 1 comprend un boitier BO au sein duquel au moins une partie des éléments du dispositif est destinée à être agencée. Par exemple, le boîtier BO héberge tout ou partie du récupérateur d'énergie 11, le module d'accumulation temporaire d'énergie 12 et le module de télécommunication 13. Le boîtier est par exemple fixé à la fourche 21 du véhicule via l'attache 10. Dans l'exemple de la Figure 2, le boîtier BO comprend le second aimant 16. Dans l'exemple de la Figure 3, la dynamo 16 peut être agencée à l'extérieur du boîtier.

En référence à nouveau à la Figure 1, le réseau 3 comprend une pluralité d'antennes 30, dont au moins une première antenne 31, une deuxième antenne 32 et une troisième antenne 33. En outre, un serveur 34 est relié au réseau 3 (par exemple en étant connecté aux antennes 30). Le serveur 34 comporte en outre une interface de communication 35 avec un second réseau pour communiquer avec le terminal 4. Par exemple, le serveur 34 est une infrastructure des technologies de l'information (IT infrastructure en anglais). Le serveur 34 est configuré pour émettre le message d'alerte à destination du terminal 4 en réponse à la réception de la communication émise par le module de télécommunication 13.

Plus spécifiquement, le réseau 3 peut être un réseau LPWA, de type LoRa (marque déposée) ou Sigfox (marque déposée). La communication qu'émet le module de télécommunication 13 est envoyée en mode de diffusion (broadcast, point-à-point, ou autre) via le réseau 3 et une ou plusieurs antennes 31, 32, 33 reçoivent la communication pour la transmettre au serveur 34. La communication est émise sans être adressée à un équipement spécifique. Par exemple, chaque réception par une antenne 31, 32, 33 peut correspondre à un signal de réception ayant une amplitude fonction de la distance avec le module de télécommunication 13 (et donc le dispositif 1). Dans un mode de réalisation particulier, il est ainsi possible, par triangulation, d'estimer, auprès du serveur 34, des données de géolocalisation du dispositif 1, représentatives d'une position courante du dispositif, d'après les amplitudes des signaux de réception que transmettent les antennes au serveur 34. Lorsque la communication est reçue par une seule des antennes 30, il est également possible d'estimer des données de géolocalisation du dispositif 1, comme un disque centré au niveau de l'antenne et de rayon déterminé en fonction de l'amplitude du signal de réception. Ainsi, le serveur 34 est configuré pour estimer des données de géolocalisation du dispositif 1. En outre, l'interface de communication 35 est configurée pour communiquer, via le second réseau, avec le terminal 4. L'interface de communication 35 est par exemple une interface de communication 2G, 3G, 4G, GSM, EDGE, GPRS, Wifi ou toute autre interface de communication. Ainsi, le serveur 34 peut envoyer un message d'alerte et le cas échéant, les données de géolocalisation du dispositif au terminal 4 via un second réseau, comme décrit ci-après.

Le serveur 34 comprend une mémoire 36 et un processeur 38. La mémoire 36 stocke des lignes de code d'un programme informatique dont l'exécution par le processeur 38 se traduit par le fonctionnement du serveur 34 comme décrit ci-après. En outre, le processeur 38 peut être connecté à une base de données 37 (laquelle peut être stockée dans la même mémoire 36 ou dans une mémoire différente connectée au processeur 38).

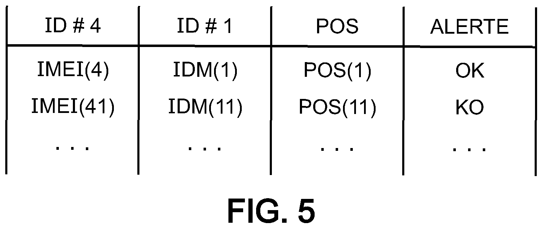

En référence à la Figure 5, la base de données 37 comporte des données d'identification du terminal 4, en correspondance les données d'identification du dispositif 1. La base de données 37 peut stocker en outre, pour de mêmes données d'identification du terminal 4, plusieurs jeux de données d'identification correspondant à plusieurs dispositifs différents d'alerte (cas d'un même utilisateur ayant un terminal donné, et possédant plusieurs véhicules et un dispositif d'alerte 1 associé à chaque véhicule). Réciproquement, plusieurs identifiants de terminaux 4 peuvent être stockés en correspondance de mêmes données d'identification de dispositif d'alerte 1 (cas de plusieurs utilisateurs disposant de ces terminaux et capables d'agir en cas de vol du véhicule). Dans ce dernier cas, un message d'alerte peut être envoyé à plusieurs terminaux à la fois.

Les données d'identification du terminal 4 identifient de manière unique le terminal 4. Ces données comprennent par exemple un numéro de téléphone associé au terminal 4, des données IMEI d'identité internationale d'équipement mobile, ou encore des données IMSI pour identifier la carte SIM du terminal 4, par exemple. Dans l'exemple de la Figure 5, les données d'identification du terminal sont référencées IMEI(4), et les données d'identification du dispositif 1 sont référencées IDM (1). Ainsi, la base de données peut être organisée comme une table de correspondance entre les données d'identification de chaque dispositif d'alerte 1 (référencées IDM (1)) et des données relatives à ce dispositif d'alerte (incluant notamment des données de contact d'un terminal associé 4, des données de géolocalisation de ce dispositif d'alerte, etc.).

En outre, la base de données 37 peut stocker les données de géolocalisation de chaque dispositif 1, par exemple les dernières données relevées en date. En variante, la base de données 37 peut stocker des données de géolocalisation précédentes, par exemple l'ensemble des données de géolocalisation relevées sur un laps de temps prédéterminé. Ces données de géolocalisation sont associées au dispositif 1, et plus précisément à ses données d'identification. Par exemple, dans la Figure 5, les données de géolocalisations du dispositif 1 sont référencées POS (1).

En outre, la base de données 37 comprend un paramètre d'alerte adapté pour sélectivement autoriser ou empêcher l'envoi d'un message d'alerte à destination du terminal en réponse à la réception par le serveur d'une communication émise par le dispositif de télécommunication 13.

Ce paramètre d'alerte est adapté pour prendre une valeur parmi deux valeurs possibles, par exemple notées OK et KO. Si la valeur est OK, le serveur 34 est configuré pour envoyer le message d'alerte au terminal 4 en réponse à la réception d'une communication émise par le module de télécommunications. A l'inverse, si la valeur est KO, le réseau est configuré pour ne pas envoyer de message d'alerte en réponse à une communication provenant du dispositif 1. La valeur OK ou KO peut être déterminée par des préférences d'un utilisateur du terminal 4. La liaison via le second réseau entre le serveur 34 et le dispositif 4 peut ainsi être bidirectionnelle. En référence à nouveau à la Figure 5, le paramètre d'alerte du terminal 4 est ici OK.

Pour l'association des données d'identification du terminal et des données d'identification du dispositif 1 au sein de la base de données 37, on peut procéder par exemple comme suit : le dispositif ou l'un des objets qui s'y rapportent, par exemple son emballage, est fourni avec des données encodées graphiquement, par exemple sous la forme d'un code barre de type QR code, que l'utilisateur peut scanner avec un dispositif d'acquisition d'image du terminal. Ce procédé se poursuit par l'envoi par le terminal d'un message à destination du serveur comprenant à la fois les données d'identification du terminal et celles du dispositif (données issues du QRC). Par exemple, dans le cas où le terminal 4 est un smartphone comportant typiquement un module 45 d'acquisition d'images (Figure 1), l'utilisateur peut scanner à l'aide de son terminal le QR code du dispositif 1, la lecture du QR code par le terminal lui permettant d'en dériver, puis transmettre au serveur 34, des données d'identification du dispositif 1. Alternativement, le procédé peut consister en ce que l'utilisateur associe le terminal 4 au dispositif 1 via un service accessible par Internet. Sur ce service, les données d'identification du dispositif d'alerte 1 peuvent être un code PIN, un identifiant, ou un mot de passe, sur l'emballage du dispositif ou communiqué au passage en caisse à l'achat du dispositif 1. L'utilisateur donne en outre à une plateforme de service en ligne, en plus de ce code, les données d'identification du terminal 4 (l'identité internationale d'équipement mobile IMEI, ou toute autre donnée d'identification du terminal).

Outre le module précité 45 d'acquisition d'images, le terminal 4 comprend une interface de communication 41 avec le second réseau, une mémoire 42, un processeur 43 et une interface homme/machine telle qu'un écran d'affichage 44. La mémoire 42 stocke des instructions de code de programme informatique pour l'exécution par le processeur 43 d'une application en lien avec l'invention. Ainsi, le processeur 43 est configuré pour traiter le message d'alerte en vue de l'affichage des données correspondantes par l'écran 44. Ces données peuvent être typiquement un identifiant du dispositif d'alerte 1, et sa position courante (issue des données de géolocalisation).

Un exemple de réalisation d'un procédé selon l'invention est maintenant décrit en référence notamment à la Figure 6.

Lors d'une première étape S1, une fois que l'énergie électrique emmagasinée dans le module d'accumulation temporaire d'énergie 12 dépasse un seuil, le module d'accumulation temporaire fournit de l'énergie électrique au processeur 19. Lors d'une étape S2, le processeur 19 lit les instructions du programme informatique, contenues dans la mémoire 18 pour amorcer la préparation d'une communication. Cette communication comprend les données d'identification du dispositif 1, ainsi, en pratique, qu'un préfixe ou un identifiant, séparé, de service pour que le serveur 34 retienne les communications qui lui sont destinées selon par exemple le protocole LoRa. L'identifiant de service peut, à ce titre, être stocké en outre dans la mémoire 18. En effet, lors de l'étape S3, l'antenne 20 du dispositif 1 envoie la communication à destination du réseau 3.

Lors d'une étape S4, le serveur 34 traite le contenu de la communication.

Plus spécifiquement, le serveur 34 reconnait l'identifiant de service dans les communications que lui adressent les antennes 30 du réseau 3. A partir de cet identifiant de service, le serveur 34 retient les communications qui lui sont destinées et identifie en outre dans les communications retenues les dispositifs d'alerte à partir de leurs données d'identification. Le serveur 34 est alors en mesure de regrouper les communications issues d'un même dispositif d'alerte IDM(1) et reçues de plusieurs antennes 31, 32, 33.

Le serveur 34 peut ainsi, pour chaque dispositif d'alerte, estimer sa position courante par triangulation typiquement. Le serveur 34 peut ensuite mettre à jour la base de données avec les nouvelles données de géolocalisation par exemple.

Ainsi, le processeur 38 du serveur 34 peut mettre en correspondance les données d'identification (IDM(1) par exemple) contenues dans la ou les communication(s) pour un même dispositif d'alerte 1, et le contenu de la base de données 37 associées à l'identifiant IDM(1) de ce dispositif 1.

Une fois ces données récupérées, à l'étape S4, le processeur du serveur 34 détermine notamment la valeur du paramètre d'alerte telle qu'elle est stockée dans la base. Si cette valeur est OK, lors d'une étape S5, le processeur 38 récupère les données d'identification du terminal. En outre, il récupère les données de géolocalisation associées. Il génère alors à l'étape S6 un signal à destination de l'interface de communication 35 pour l'envoi du message d'alerte, avec les données d'identification du terminal 4 comme données d'adresse du message d'alerte, le message d'alerte comportant notamment les données d'identification IDM(1) du dispositif d'alerte 1 ayant émis la communication et éventuellement ses données de géolocalisation.

Lors d'une étape S7, l'interface de communication 41 du terminal 4 reçoit le message d'alerte envoyé par le serveur 34. Le processeur 43 du terminal traite alors le message d'alerte. Plus spécifiquement, il peut en extraire par exemple l'identifiant du dispositif d'alerte 1 et éventuellement sa position courante (en fonction des données de géolocalisation). Lors d'une étape S8, le processeur 43 du terminal génère une notification représentative du fait qu'un message d'alerte a été reçu, et il pilote l'écran 44 pour afficher cette notification avec éventuellement la position du dispositif 1.

Lors d'une étape S9, l'utilisateur peut modifier la configuration d'émission des messages d'alerte par le réseau. Plus spécifiquement, il peut choisir de recevoir ou de ne pas recevoir de message d'alerte. Par exemple, pour ce faire, l'utilisateur du terminal 4 interagit avec une interface homme/machine de l'application qu'exécute son terminal pour notifier les messages d'alerte et via laquelle la valeur du paramètre d'alerte associée au terminal (OK ou KO) est modifiable. La modification de cette valeur peut être communiquée en retour au serveur 34. Ainsi, si la valeur courante de ce paramètre est OK, il peut désactiver l'envoi des messages d'alerte en modifiant cette valeur pour prendre la nouvelle valeur KO. Cette situation peut se rencontrer dans le cas où la personne qui utilise actuellement le véhicule est autorisée. Il peut s'agir typiquement de l'utilisateur-même du terminal. Ainsi, l'utilisateur peut désactiver au moins pendant une temporisation prédéterminée l'émission des messages d'alarme comme décrit en détails ci-après.

Ainsi, lors d'une étape S10 réalisée auprès du serveur 34, la valeur du paramètre d'alerte dans la base de données 37 peut être actualisée. Plus spécifiquement, la valeur du paramètre d'alerte est actualisée en réponse à la réception, par l'interface de communication 35, de l'information représentative de la modification du paramètre d'alerte (OK en KO, dans l'exemple illustré sur la Figure 6).

Optionnellement, lors d'une étape S11, suite à un changement de valeur du paramètre d'alerte, cette valeur reste à KO pendant une certaine durée. Cette durée peut être limitée par mesure de sécurité, par exemple à une ou deux heures. Cette réalisation peut correspondre au cas où l'utilisateur prend sa bicyclette et oublie par exemple de désactiver le système d'alerte. Dès la première minute d'utilisation, il reçoit alors une notification sur son terminal lui indiquant que sa bicyclette est en mouvement. Dans ce cas, il peut désactiver l'alerte auprès du serveur et la valeur correspondante est à KO. Néanmoins, après avoir utilisé sa bicyclette pendant une durée par exemple d'une heure ou deux, l'utilisateur peut oublier d'activer à nouveau le système d'alerte. Aussi, la valeur correspondante passe à OK auprès du serveur au bout de cette durée de temporisation, par exemple d'une heure ou deux. Ainsi, lors d'une étape S12, à l'issue de cette durée, la valeur du paramètre d'alerte comprise dans la base de données 37 peut de nouveau être changée à OK pour ré-initier les messages d'alerte le cas échéant.

L'invention présente plusieurs avantages.

Tout d'abord, l'utilisation d'un récupérateur d'énergie basé exclusivement sur la rotation de la roue du véhicule permet au dispositif 1 d'être autonome d'un point de vue énergétique. Le dispositif ne comporte aucune batterie et ne nécessite aucune recharge électrique.

En outre, le module de télécommunication 13 du dispositif selon l'invention présente un fonctionnement très avantageux. Le module de télécommunication ne requiert qu'une faible puissance électrique que la rotation d'une roue, notamment de bicyclette, peut générer. Par ailleurs, le protocole LPWA permet au module de télécommunication du dispositif d'avoir une longue portée, avec une faible consommation.

En outre, le dispositif est simple à installer sur le véhicule et peut être associé à un terminal très rapidement auprès d'une base de données.

Par ailleurs, les éléments du dispositif (le récupérateur d'énergie, le module d'accumulation temporaire d'énergie électrique ou le module de télécommunication) peuvent être de facture simple et robuste de sorte que le dispositif selon l'invention est peu coûteux. Il est ici souligné que l'envoi de communication est uniquement effectué en cas de mouvement du véhicule sans nécessiter une mise en œuvre d'une logique de service complexe au niveau du dispositif. En effet, l'envoi de communication est uniquement conditionné par l'alimentation en énergie électrique et donc par la rotation de la roue.

## Revendications

1. Dispositif autonome d'alerte en cas de mouvement d'un véhicule, comportant :
- un récupérateur d'énergie électrique (11) générée par la rotation d'une roue (2) du véhicule,
ledit dispositif étant **caractérisé par**
- un module d'accumulation temporaire (12) d'une partie au moins de ladite énergie électrique, adapté pour délivrer ladite énergie électrique à partir d'une valeur seuil emmagasinée dans ledit module d'accumulation temporaire,
- un module de télécommunication (13) adapté pour être alimenté par le module d'accumulation temporaire, et configuré pour émettre, en réponse à sa seule alimentation en énergie électrique par le module d'accumulation temporaire (12), une communication à destination d'un réseau (3) pour l'envoi d'un message d'alerte à destination d'un terminal (4), l'atteinte de la valeur seuil étant caractéristique du mouvement du véhicule.

2. Dispositif selon la revendication 1, dans lequel le module de télécommunication (13) comprend une mémoire (18) stockant des données d'identification du dispositif pour l'établissement dans une base de données (37) connectée au réseau (3) d'une association entre lesdites données d'identification du dispositif (1) et des données représentatives d'une adresse du terminal (4).

3. Dispositif suivant la revendication 2, dans lequel la communication comprend les données d'identification du dispositif (1) et est envoyée à destination du réseau (3) en mode de diffusion.

4. Dispositif selon l'une des revendications précédentes, dans lequel ledit réseau est un réseau radiofréquence étendu, basé sur un protocole de type LPWA.

5. Dispositif selon l'une des revendications précédentes, dans lequel le récupérateur d'énergie (11) est adapté pour convertir une partie au moins de l'énergie mécanique fournie par la rotation de la roue (2) du véhicule en énergie électrique.

6. Dispositif suivant la revendication 5, dans lequel le récupérateur d'énergie (11) comprend au moins un premier aimant (14) fixé sur la roue et un second aimant (15) fixé sur le véhicule et immobile dans le référentiel du véhicule de telle sorte que le mouvement de rotation de la roue (2) du véhicule entraine une interaction entre les premier et second aimants, générant une énergie électrique.

7. Dispositif selon la revendication 6, dans lequel le module d'accumulation temporaire (12) est connecté au second aimant (15).

8. Dispositif suivant la revendication 5, dans lequel le récupérateur d'énergie comprend une dynamo (16).

9. Procédé d'émission d'un message d'alerte en cas de mouvement d'un véhicule comportant un dispositif autonome selon l'une quelconque des revendications précédentes, le procédé comportant au moins les étapes mises en œuvre auprès du dispositif autonome :
- en réponse à la seule alimentation électrique issue du module d'accumulation temporaire d'énergie (12), délivrée à partir de la valeur seuil emmagasinée dans ledit module d'accumulation temporaire, ladite alimentation électrique étant générée par la rotation de la roue (2) du véhicule, mettre en forme une communication en vue de l'envoi d'un message d'alerte à destination dudit terminal (4), l'atteinte de la valeur seuil étant caractéristique du mouvement du véhicule, et
- commander le module de télécommunication (13) pour l'envoi de la communication à destination du réseau (3).

10. Procédé selon la revendication 9, dans lequel la communication comporte des données d'identification du dispositif, le procédé comportant en outre les étapes mises en œuvre par un serveur (34) connecté au réseau (3):
- sur réception de la communication, identifier une adresse du terminal dans une base de données (37) reliée au serveur et comportant une association entre lesdites données d'identification du dispositif (1) et des données représentatives d'une adresse du terminal (4), et
- émettre le message d'alerte à l'adresse du terminal via un second réseau.

11. Procédé selon la revendication 10, dans lequel, sur réception de la communication, le serveur (34) détermine et envoie des données de géolocalisation représentatives d'une position courante du dispositif à destination du terminal (4).

12. Procédé selon la revendication 11, dans lequel la communication est envoyée via le réseau (3) en mode de diffusion et est reçue par une pluralité d'antennes (31, 32, 33) du réseau (3), le serveur étant apte à déterminer lesdites données de géolocalisation par triangulation.

13. Programme informatique comprenant des instructions pour la mise en œuvre du procédé selon l'une quelconque des revendications 9 à 12, lorsque lesdites instructions sont exécutées par un processeur.

## Patentansprüche

1. Autonome Vorrichtung zur Warnung im Fall einer Bewegung eines Fahrzeugs, welche aufweist:
- eine Rückgewinnungseinrichtung für elektrische Energie (11), die durch die Drehung eines Rades (2) des Fahrzeugs erzeugt wird, wobei die Vorrichtung **gekennzeichnet ist durch**
- ein Modul zur vorübergehenden Speicherung (12) wenigstens eines Teils dieser elektrischen Energie, das dafür eingerichtet ist, die elektrische Energie ab einem Schwellenwert zu liefern, der in dem Modul zur vorübergehenden Speicherung gespeichert ist,
- ein Telekommunikationsmodul (13), das dazu eingerichtet ist, von dem Modul zur vorübergehenden Speicherung gespeist zu werden, und dafür ausgelegt ist, in Reaktion allein auf seine Speisung mit elektrischer Energie durch das Modul zur vorübergehenden Speicherung (12) eine Mitteilung an ein Netz (3) zum Senden einer Warnnachricht an ein Endgerät (4) auszugeben, wobei das Erreichen des Schwellenwertes für die Bewegung des Fahrzeugs charakteristisch ist.

2. Vorrichtung nach Anspruch 1, wobei das Telekommunikationsmodul (13) einen Speicher (18) umfasst, der Identifikationsdaten der Vorrichtung speichert, zur Herstellung, in einer mit dem Netz (3) verbundenen Datenbank (37), einer Zuordnung zwischen den Identifikationsdaten der Vorrichtung (1) und Daten, die für eine Adresse des Endgerätes (4) repräsentativ sind.

3. Vorrichtung nach Anspruch 2, wobei die Mitteilung die Identifikationsdaten der Vorrichtung (1) umfasst und an das Netz (3) im Rundsendemodus gesendet wird.

4. Vorrichtung nach einem der vorhergehenden Ansprüche, wobei das Netz ein Weitverkehrsfunknetz ist, das auf einem Protokoll vom Typ LPWA basiert.

5. Vorrichtung nach einem der vorhergehenden Ansprüche, wobei die Energierückgewinnungseinrichtung (11) dazu eingerichtet ist, wenigstens einen Teil der mechanischen Energie, die durch die Drehung des Rades (2) des Fahrzeugs geliefert wird, in elektrische Energie umzuwandeln.

6. Vorrichtung nach Anspruch 5, wobei die Energierückgewinnungseinrichtung (11) wenigstens einen ersten Magneten (14), der an dem Rad befestigt ist, und einen zweiten Magneten (15), der an dem Fahrzeug befestigt ist und im Bezugssystem des Fahrzeugs unbeweglich ist, umfasst, derart, dass die Drehbewegung des Rades (2) des Fahrzeugs eine Interaktion zwischen dem ersten und dem zweiten Magneten zur Folge hat, die eine elektrisch Energie erzeugt.

7. Vorrichtung nach Anspruch 6, wobei das Modul zur vorübergehenden Speicherung (12) mit dem zweiten Magneten (15) verbunden ist.

8. Vorrichtung nach Anspruch 5, wobei die Energierückgewinnungseinrichtung einen Dynamo (16) umfasst.

9. Verfahren zum Aussenden einer Warnnachricht im Fall einer Bewegung eines Fahrzeugs, das eine autonome Vorrichtung nach einem der vorhergehenden Ansprüche aufweist, wobei das Verfahren wenigstens die folgenden Schritte umfasst, die an der autonomen Vorrichtung durchgeführt werden:
- in Reaktion allein auf die Stromversorgung durch das Modul zur vorübergehenden Speicherung von Energie (12), die ab dem Schwellenwert erfolgt, der in dem Modul zur vorübergehenden Speicherung gespeichert ist, wobei diese Stromversorgung durch die Drehung eines Rades (2) des Fahrzeugs erzeugt wird, Erstellen einer Mitteilung zum Senden einer Warnnachricht an das Endgerät (4), wobei das Erreichen des Schwellenwertes für die Bewegung des Fahrzeugs charakteristisch ist, und
- Ansteuern des Telekommunikationsmoduls (13) für das Senden der Mitteilung an das Netz (3).

10. Verfahren nach Anspruch 9,
wobei die Mitteilung Identifikationsdaten der Vorrichtung beinhaltet, wobei das Verfahren außerdem die folgenden Schritte umfasst, die von einem mit dem Netz (3) verbundenen Server (34) durchgeführt werden:
- bei Empfang der Mitteilung, Identifizieren einer Adresse des Endgerätes in einer Datenbank (37), die mit dem Server verbunden ist und eine Zuordnung zwischen den Identifikationsdaten der Vorrichtung (1) und Daten, die für eine Adresse des Endgerätes (4) repräsentativ sind, umfasst, und
- Aussenden der Warnnachricht an die Adresse des Endgerätes über ein zweites Netz.

11. Verfahren nach Anspruch 10,
wobei bei Empfang der Mitteilung der Server (34) Geolokalisierungsdaten, die für eine aktuelle Position der Vorrichtung repräsentativ sind, bestimmt und an das Endgerät (4) sendet.

12. Verfahren nach Anspruch 11,
wobei die Mitteilung über das Netz (3) im Rundsendemodus gesendet wird und durch mehrere Antennen (31, 32, 33) des Netzes (3) empfangen wird, wobei der Server in der Lage ist, die Geolokalisierungsdaten durch Triangulation zu bestimmen.

13. Computerprogramm, welches Anweisungen zur Durchführung des Verfahrens nach einem der Ansprüche 9 bis 12, wenn die Anweisungen von einem Prozessor ausgeführt werden, umfasst.

## Claims

1. Autonomous device for alert in case of motion of a vehicle, comprising:
- a recuperator of electrical energy (11) generated by the rotation of a wheel (2) of the vehicle,
said device being **characterized by**
- a module for temporary accumulation (12) of part at least of said electrical energy and adapted to deliver said electrical energy starting at a threshold value held in said temporary accumulation module,
- a telecommunication module (13) adapted to be supplied by the temporary accumulation module, and configured to emit, in response solely to its electrical energy supply by the temporary accumulation module (12), a communication destined for a network (3) for the dispatching of an alert message destined for a terminal (4), the attaining of the threshold value being characteristic of the motion of the vehicle.

2. Device according to Claim 1, in which the telecommunication module (13) comprises a memory (18) storing identification data of the device for the establishment in a database (37) connected to the network (3) of an association between said identification data of the device (1) and data representative of an address of the terminal (4).

3. Device in accordance with Claim 2, in which the communication comprises the identification data of the device (1) and is dispatched destined for the network (3) in broadcast mode.

4. Device according to one of the preceding claims, in which said network is a wide-area radiofrequency network, based on a protocol of LPWA type.

5. Device according to one of the preceding claims, in which the energy recuperator (11) is adapted to convert a part at least of the mechanical energy provided by the rotation of the wheel (2) of the vehicle into electrical energy.

6. Device in accordance with Claim 5, in which the energy recuperator (11) comprises at least one first magnet (14) fixed on the wheel and a second magnet (15) fixed on the vehicle and immobile in the frame of reference of the vehicle so that the rotation motion of the wheel (2) of the vehicle drives an interaction between the first and second magnets, generating electrical energy.

7. Device according to Claim 6, in which the temporary accumulation module (12) is connected to the second magnet (15).

8. Device in accordance with Claim 5, in which the energy recuperator comprises a dynamo (16).

9. Method for emitting an alert message in case of motion of a vehicle comprising an autonomous device according to any one of the preceding claims, the method comprising at least the steps implemented at the autonomous device:
- in response solely to the electrical supply issuing from the module for temporary accumulation of energy (12), delivered starting at the threshold value held in said temporary accumulation module, said electrical supply being generated by the rotation of the wheel (2) of the vehicle,
format a communication with a view to the dispatching of an alert message destined for said terminal (4), the attaining of the threshold value being characteristic of the motion of the vehicle, and
- command the telecommunication module (13) in respect of the dispatching of the communication destined for the network (3).

10. Method according to Claim 9, in which the communication comprises identification data of the device, the method furthermore comprising the steps implemented by a server (34) connected to the network (3) :
- on receipt of the communication, identify an address of the terminal in a database (37) linked to the server and comprising an association between said identification data of the device (1) and data representative of an address of the terminal (4), and
- emit the alert message at the address of the terminal via a second network.

11. Method according to Claim 10, in which, on receipt of the communication, the server (34) determines and dispatches geolocation data representative of a current position of the device destined for the terminal (4).

12. Method according to Claim 11, in which the communication is dispatched via the network (3) in broadcast mode and is received by a plurality of antennas (31, 32, 33) of the network (3), the server being able to determine said geolocation data by triangulation.

13. Computer program comprising instructions for the implementation of the method according to any one of Claims 9 to 12, when said instructions are executed by a processor.
